# EUROPEAN PATENT APPLICATION

(11) **EP 2 315 062 A2**
(43) Date of publication of application: **27.04.2011**
(21) Application number: 10013692.8
(22) Date of filing: 15.10.2010
(51) Int. Cl.: G02B 6/44

(54) **Pigtail handling device and optical waveguide distribution device**

(30) Priority: 22.10.2009 DE 202009014308 U
(71) Applicant: CCS Technology, Inc., Wilmington, DE 19803 (US)
(72) Inventor: Müller, Thorsten, 58708 Menden (DE); Syplacz, Roman, 58099 Hagen (DE)
(74) Representative: Sturm, Christoph

(57) **Abstract**

Pigtail handling device for pigtails which are installed in an optical waveguide distribution device and are prefabricated at one end with optical waveguide plugs, comprising a plurality of identical segments (22), wherein each segment (22) on the one hand has an excess-length storage area (23) for storing excess lengths of active pigtails whose optical waveguide plugs are connected to optical waveguide sockets of a patch area of the optical waveguide distribution device, and on the other hand has a guide area (24), which comprises two guide channels (25, 26), specifically a first guide channel (25) for guiding active pigtails and a second guide channel (26) for guiding passive pigtails, whose optical waveguide plugs are not connected to optical waveguide sockets of the patch area. (Fig. 1)

## Description

The invention relates to a pigtail handling device according to the precharacterizing clause of Claims 1 and 5, and to an optical waveguide distribution device according to the precharacterizing clause of Claim 8.

When designing data transmission networks formed from optical waveguides, optical waveguides have to be connected to one another. Junction points such as these have to be handled in optical waveguide distribution devices, both outside buildings and inside buildings. Outside buildings, junction points between optical waveguides are typically accommodated in optical waveguide distribution devices in the form of cable sleeves or road distribution devices. Within buildings, junction points between optical waveguides are typically handled in optical waveguide distribution devices in the form of distribution cabinets or distribution racks. Optical waveguide distribution devices in the form of wall distribution devices or wall box may be used both outside buildings and inside buildings.

Optical waveguide distribution devices in the form of wall boxes are known from the product catalogue "Zubehör für LWL-Kabelnetze [Accessories for optical waveguide cable networks], Issue 1, pages 184 to 187, 2001, Corning Cable Systems GmbH & Co. KG". The wall distribution devices disclosed there have a housing, with assemblies, specifically splice cassettes and/or patch panels having plug connectors, being arranged in an internal area of the housing, in order to handle optical waveguides.

Particularly when the intention is to use an optical waveguide distribution device in the form of a wall distribution device or wall box in an FTTH (Fiber To The Home) application, there is an increasing demand for prefabricated solutions. Prefabricated pigtails are installed in prefabricated wall distribution devices, with pigtails being prefabricated with an optical waveguide plug at one end. The pigtails which are prefabricated at one end with an optical waveguide plug can be connected in the factory via their optical waveguide plugs to optical waveguide sockets of a patch panel in the wall distribution device. Opposite ends of the pigtails, which are not prefabricated with optical waveguide plugs, are stored in at least one splice cassette, with the or each splice cassette being used to hold at least one splice between the optical waveguides of the pigtails and optical waveguides of a main optical waveguide cable which can be inserted into the wall distribution device.

Since network carriers increasingly have to allow their networks to be used by other network operators, pigtails of different network operators in some circumstances have to be handled in prefabricated wall distribution devices. When an end customer changes his network operator, a pigtail of a first network operator, for example, must be deactivated in order to allow a pigtail of another network operator then to be activated, with the pigtails being activated and deactivated by coupling the optical waveguide plugs of the respective pigtails to the optical waveguide sockets in the patch panel for activation, and decoupling them therefrom for deactivation.

Until now, no optical waveguide distribution devices have been known which allow structured handling of active pigtails and passive pigtails.

There is therefore a requirement for an optical waveguide distribution device as well as pigtail handling devices which allow simple and structured handling of active and passive pigtails within an optical waveguide distribution device.

Against this background, the present invention is based on the problem of providing a novel pigtail handling device for pigtails which are installed in an optical waveguide distribution device, as well as a novel optical waveguide distribution device.

This problem is solved by a pigtail handling device according to Claim 1.

According to this claim, a pigtail handling device comprises a plurality of identical segments, wherein each segment on the one hand has an excess-length storage area for storing excess lengths of active pigtails whose optical waveguide plugs are connected to optical waveguide sockets of a patch area of the optical waveguide distribution device, and on the other hand has a guide area, which comprises two guide channels, specifically a first guide channel for guiding active pigtails and a second guide channel for guiding passive pigtails, whose optical waveguide plugs are not connected to optical waveguide sockets of the patch area.

This problem is also solved by a pigtail handling device according to Claim 5.

According to this claim, a pigtail handling device comprises an excess-length storage area for storing excess lengths of passive pigtails, whose optical waveguide plugs are not connected to optical waveguide sockets of a patch area of the optical waveguide distribution device, and by a holding area (which has a plurality of adapters, wherein the passive pigtails can be coupled by their optical waveguide plugs to the adapters, the holding area positioned at the side alongside the excess-length storage area, wherein both areas are formed on a common base body.

This problem is also solved by an optical waveguide distribution device according to Claim 8.

Preferred developments of the invention result from the dependent claims and the following description. Exemplary embodiments of the invention will be explained in more detail, without any restriction to said exemplary embodiments, with reference to the drawing, in which:
- Figure 1:: shows a plan view of a populated internal area of an optical waveguide distribution device according to the invention, according to one preferred exemplary embodiment of the invention;
- Figure 2: shows a detail of the optical waveguide distribution device shown in Figure 1;
- Figure 3: shows a detail of the detail shown in Figure 2;
- Figure 4: shows a perspective view of the detail shown in Figure 3;
- Figure 5: shows a perspective view of a further detail of the optical waveguide distribution device shown in Figure 1;
- Figure 6: shows a detail of the detail shown in Figure 5; and
- Figure 7: shows a further detail of the detail shown in Figure 5.

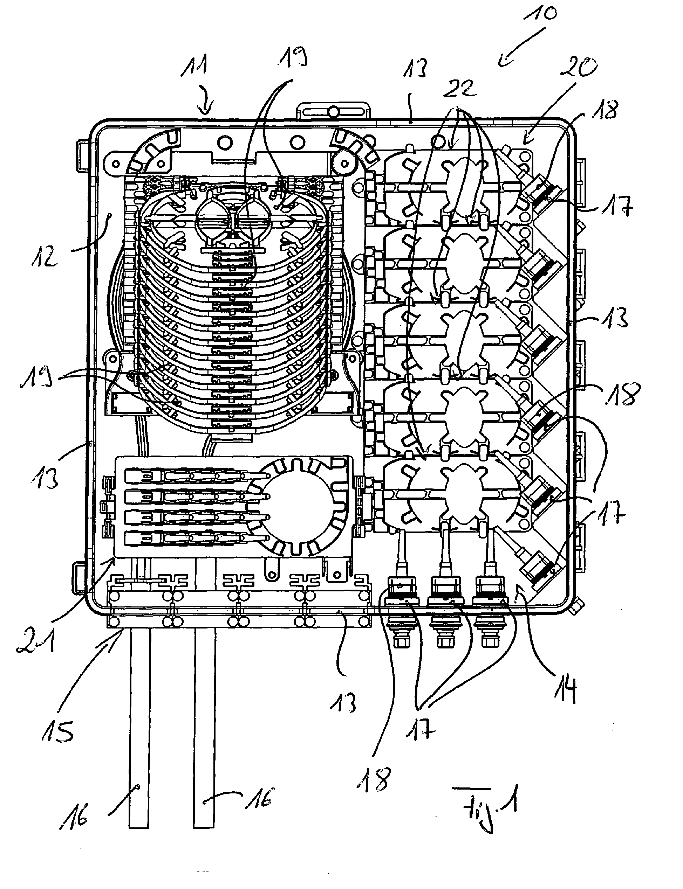

The present invention in this case relates to an optical waveguide distribution device and to pigtail handling devices which are a component of an optical waveguide distribution device such as this. The invention will be described in detail in the following text with reference to Figures 1 to 7, in which case Figures 1 to 7 show different views and details of an optical waveguide distribution device 10 in the form of a wall distribution device.

The optical waveguide distribution device 10, which is illustrated in Figure 1 and is in the form of a wall box or wall distribution device, has a housing 11, with the figure showing a rear wall 12 and four side walls 13 of the housing 11. The rear wall 12 as well as the four side walls 13 together with a front wall of the housing 11, which is not shown in Figure 1, bound an internal area 14 of the wall box 10, with a plurality of assemblies for handling optical waveguides being positioned in the internal area 14.

In the illustrated exemplary embodiment, a lower side wall 13 of the housing 12 has an associated insertion area 15, in order to insert a main optical waveguide cable 16 into the internal area 14 of the optical waveguide distribution device 10, which is in the form of a wall box, and to pass it out of the internal area 14.

Adjacent to the insertion area 15, in the same way as the right-hand side wall 13 of the housing 11, the lower side wall 13 has associated optical waveguide sockets 17, which form a patch panel or a patch area of the optical waveguide distribution device 10 and can be coupled to the optical waveguide plugs 18 by pigtails which are prefabricated with an optical waveguide plug at one end. Only the optical waveguide plugs 18 of the pigtails are shown in Figure 1.

In addition to the insertion area 15 of the main optical waveguide cable 16 and to the patch area, which is formed by the optical waveguide sockets 17, for the pigtails, the optical waveguide distribution device 10, which is in the form of a wall box, has a plurality of splice cassettes 19 in which it is possible to store splices between the optical waveguides of the main optical waveguide cable 16 and the optical waveguides of the pigtails.

The wall box illustrated in Figure 1 is prefabricated in the factory with pigtails and it is accordingly equipped in the factory with pigtails which are prefabricated at one end of the optical waveguide plugs 18. This is because, when a wall box that has been prefabricated with pigtails such as this is installed in the panel, only the main optical waveguide cable 16 need be inserted into it, and at least one optical waveguide of the main optical waveguide cable 16 must be spliced to an optical waveguide of at least one pigtail, with the respective splice then being stored in a splice cassette 19.

As already stated, the optical waveguide plugs 18 of the pigtails can be coupled to the optical waveguide sockets 17 of the patch panel of the optical waveguide distribution device 10, specifically from the internal area of the optical waveguide distribution device 10. Optical waveguide cables which lead to subscribers, but are not shown in Figure 1, can likewise be connected by means of optical waveguide plugs to the optical waveguide sockets 17 of the distribution panel of the optical waveguide distribution device 10, specifically from outside the housing 11, in order in this way to ensure a connection between the optical waveguides of the pigtails and the optical waveguides of the optical waveguide cables which lead to the subscribers.

When only connections of one network operator need be handled in an optical waveguide distribution device such as this, the number of pigtails to be handled in the optical waveguide distribution device 10 corresponds to the number of optical waveguide sockets 17, as a result of which the optical waveguide plugs 18 of all the pigtails can all be connected to the optical waveguide sockets 17 in the distribution panel.

However, since an optical waveguide distribution device 10 such as this must be accessible for different network operators, it is possible for the number of the pigtails to be handled in the optical waveguide distribution device 10, and therefore the number of optical waveguide plugs 18 which are associated with the pigtail, to be greater than the number of available optical waveguide sockets 17 in the distribution panel.

In this case, active pigtails are then connected by their optical waveguide plugs 18 to the optical waveguide sockets 17 in the distribution panel while, in contrast, passive pigtails are not connected by their optical waveguide plugs 18 to the optical waveguide sockets 17 in the distribution panel.

In this case, both active pigtails and passive pigtails must be handled securely, reliably and easily in the optical waveguide distribution device 10.

The present invention in this case now relates to those details of an optical waveguide distribution device 10 with the aid of which such active pigtails and passive pigtails can be handled securely, easily, reliably and in a structured form.

The optical waveguide distribution device 10 which is illustrated in Figure 1 and is in the form of a wall distribution device or wall box has two pigtail handling devices of different versions, specifically a first pigtail handling device 20 and a second pigtail handling device 21. As can be seen from Figure 1, the second pigtail handling device 21 is positioned between the insertion area 15 and the splice cassettes 19, adjacent to the insertion area 15 for the main optical waveguide cable 16.

In this case, starting from the insertion area 15, the main optical waveguide cable 16 can be passed under the second pigtail handling device 21 in the direction of the splice cassettes 19 in order in this way to feed optical waveguides which are guided in the main optical waveguide cable 16 to the splice cassettes 19.

The first pigtail handling device 20 is arranged at the side alongside the splice cassettes 19 and the second handling device 21, specifically between the same and the patch panel of the optical waveguide distribution device 10, which is formed by the optical waveguide sockets 17. Pigtails, specifically both active pigtails and passive pigtails, can be passed via the first pigtail handling device 20, starting from the splice cassettes 19, with active pigtails being passed via the first pigtail handling device 20 to the optical waveguide sockets 17 in the patch panel. In contrast, passive pigtails can be passed via the first pigtail handling device 20 to the second pigtail handling device 21.

As shown in Figure 1, the first pigtail handling device 20 is formed by a plurality of identical segments 22, in this case five.

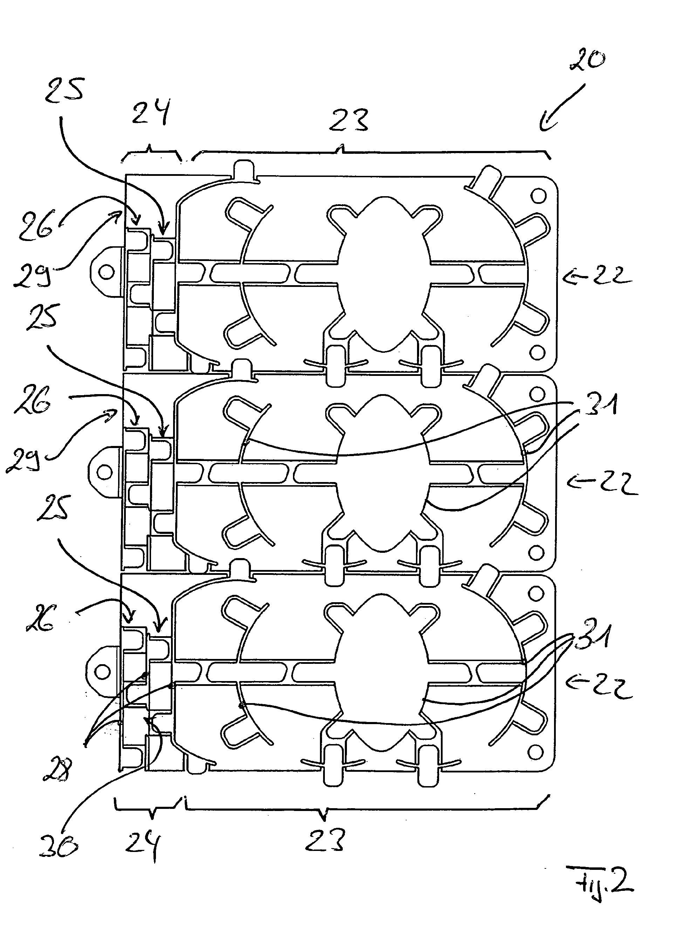

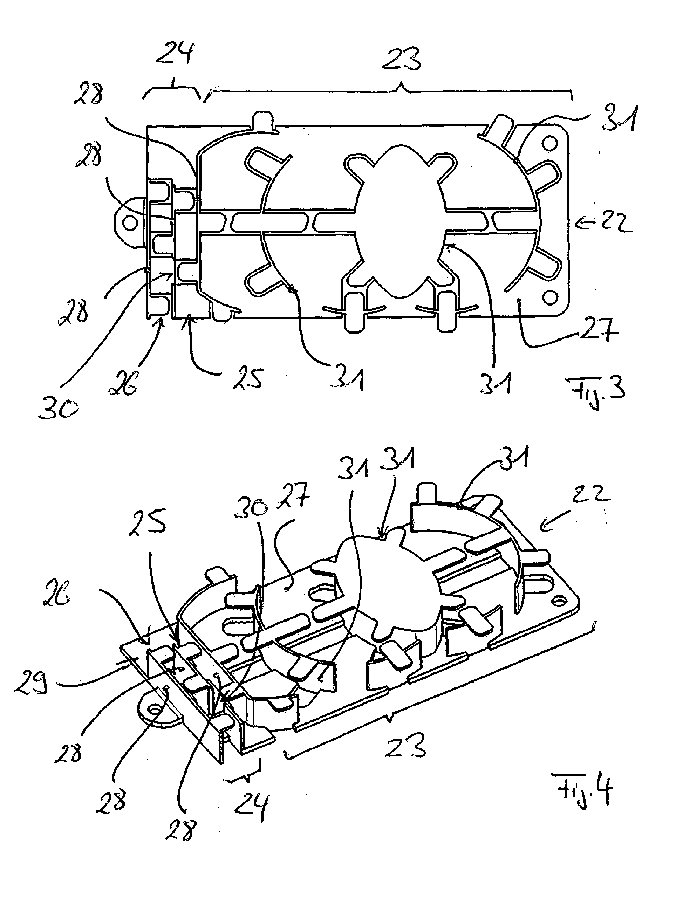

Figure 2 shows three such segments 22, and Figures 3 and 4 show one segment 22 on its own. Each segment 22 of the first pigtail handling device 20 has an excess-length storage area 23 for an excess length of active pigtails, which are passed via the respective segment 22 to the patch area of the optical waveguide distribution device 10, and whose optical waveguide plugs 18 are connected to the optical waveguide sockets 17 in the patch area, and on the other hand via a guide area 24, which comprises two guide channels, for active pigtails and passive pigtails.

A first guide channel 25 in the guide area 24 of the respective segment 22 of the first pigtail handling device 20 is used to guide active pigtails, and a second guide channel 26 is used to guide passive pigtails, whose optical waveguide plugs 18 are not connected to the optical waveguide sockets 17 in the patch area or patch panel of the optical waveguide distribution device 10.

As shown in Figure 2, the first guide channel 25, which is used to guide active pigtails, is positioned in the area of each segment 22 between the second guide channel 26, which is used to guide passive pigtails, and the excess-length storage area 23 of the respective segment 22.

This is because, when the individual segments 22 of the first pigtail handling device 20 are positioned one above the other or alongside one another, as can be seen in Figures 1 and 2, the first guide channels 25 and the second guide channels 26 of the segments 22 are each aligned with one another, such that each complement one another.

Each segment 22 of the first pigtail handling device 20 has a base body 27 in the form of a plate, with walls 28, which bound the two guide channels 25 and 26 from one another, projecting, with respect to the plate-like base body 27, in the guide area 24 of each segment 22, in which the guide channels 25 and 26 are formed.

As can best be seen from Figures 3 and 4, the walls 28 do not in this case extend over the entire plate-like base body 27, such that, when the segments 22 are positioned one above the other or alongside one another and the walls of the individual segments 22 are aligned with one another, the walls 28 are interrupted by gaps 29. Further gaps 30 are formed in the area of the wall 28 which directly separates the two guide channels 25 and 26. The gaps 29, 30 allow the pigtails to be passed over between the guide channels 25 and 26.

Walls 31 likewise project from the plate-like base body 27 in the area of the excess-length storage area 23 of the segments 22, but these walls 31 are in the form of circle segments and are used to guide excess lengths of active pigtails, while complying with the minimum permissible bending radii.

This is because, when a pigtail is connected by means of its prefabricated optical waveguide plug 18 to an optical waveguide socket 17 in the patch area of the optical waveguide distribution device 10, that is to say when the pigtail is an active pigtail, it is always guided in the area of the first guide channel 25 and, starting from the first guide channel 25, can then be passed to the excess-length storage area 23 of that segment 22 of the first pigtail handling device 20 which is positioned adjacent to that optical waveguide socket 17 to which the respective active pigtail is coupled by means of its optical waveguide plug 18.

This is because, on the other hand, when a passive pigtail is present, whose optical waveguide plug 18 is not connected to an optical waveguide socket 17 in the patch area of the optical waveguide distribution device 10, the respective passive pigtail is guided, starting from the splice cassettes 19, all the way through in the area of the second guide channels 26 of the segments 22 of the first pigtail handling device 20 and, starting from the first segment 22 of the first pigtail handling device 20, is then passed to the second pigtail handling device 21.

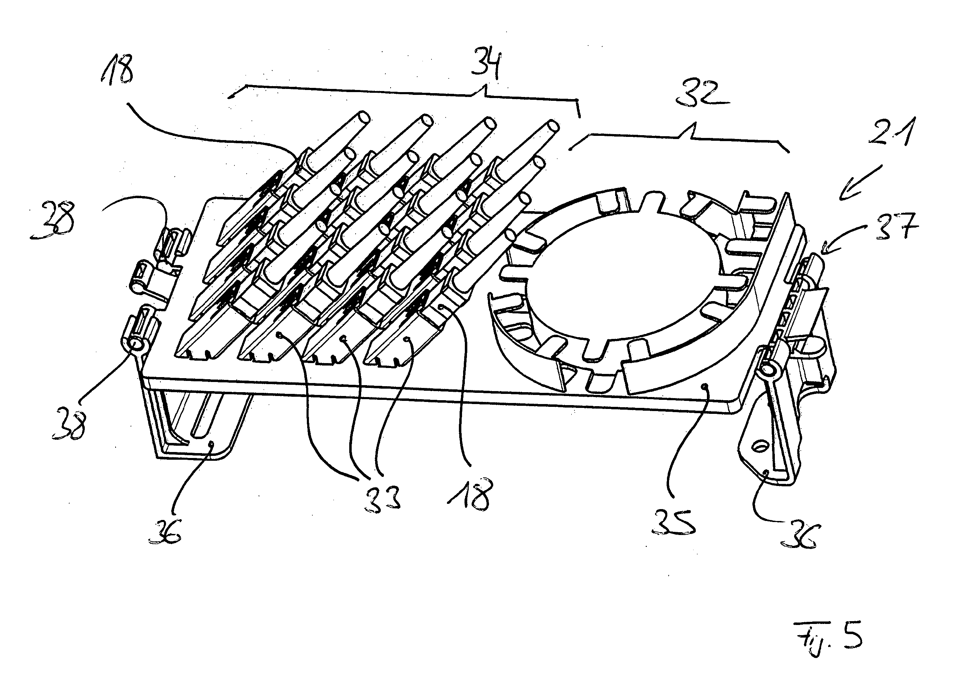

The second pigtail handling device 21, which is shown on its own in Figure 5, comprises an excess-length storage area 32 for storing excess-lengths of passive pigtails, whose optical waveguide plugs 18, as already stated, are not connected to optical waveguide sockets 17 in the patch area of the optical waveguide distribution device 10, and has a holding area 34, which has a plurality of adapters 33, for the optical waveguide plugs 18 of passive pigtails.

The second pigtail handling device 21 has a plate-like base body 35, with both the excess-length storage area 32 and the holding area 34 for the adapters 33 each being formed on the plate-like base body 35.

The plate-like base body 35 is mounted via attachment feet 36 on the rear wall 12 of the housing 11 of the optical waveguide distribution device 10, such that a free space is formed between the rear wall 12 and the plate-like base body 35 of the second pigtail handling device 21, through which free space, as shown in Figure 1, the main optical waveguide cable 16 can be passed, starting from the insertion area 15, under the second pigtail handling device 21, to the splice cassettes 19. A rotary joint 37 is formed in the area of the right-hand attachment foot 36 in Figure 5, about which the plate-like base body 35 of the second pigtail handling device 21, and accordingly the excess-length storage area 32, can be pivoted together with the holding area 34 thereof. The plate-like base body 35 of the second pigtail handling device 21 can be locked via sections 38 by means of the opposite attachment foot 36.

The holding area 34 of the second pigtail handling device 21 is used to hold a plurality of adapters 33, with the adapters 33 being positioned like an array in the holding area 34, as shown in Figure 5, in the form of a plurality of rows and columns alongside one another and one above the other. In this case, each adapter 33 acts as a holder for the optical waveguide plug 18 of one passive pigtail, which is not connected to an optical waveguide circuit 17 in the patch area on the optical waveguide distribution device 10.

As can be seen from Figure 5, the adapters 33 are positioned inclined with respect to the base body 35 of the second pigtail handling device 21, specifically such that a holding opening 39 in the adapters 33, into which the optical waveguide plug 18 of a passive pigtail can be inserted, faces the excess-length storage area 32 of the second pigtail handling device 21.

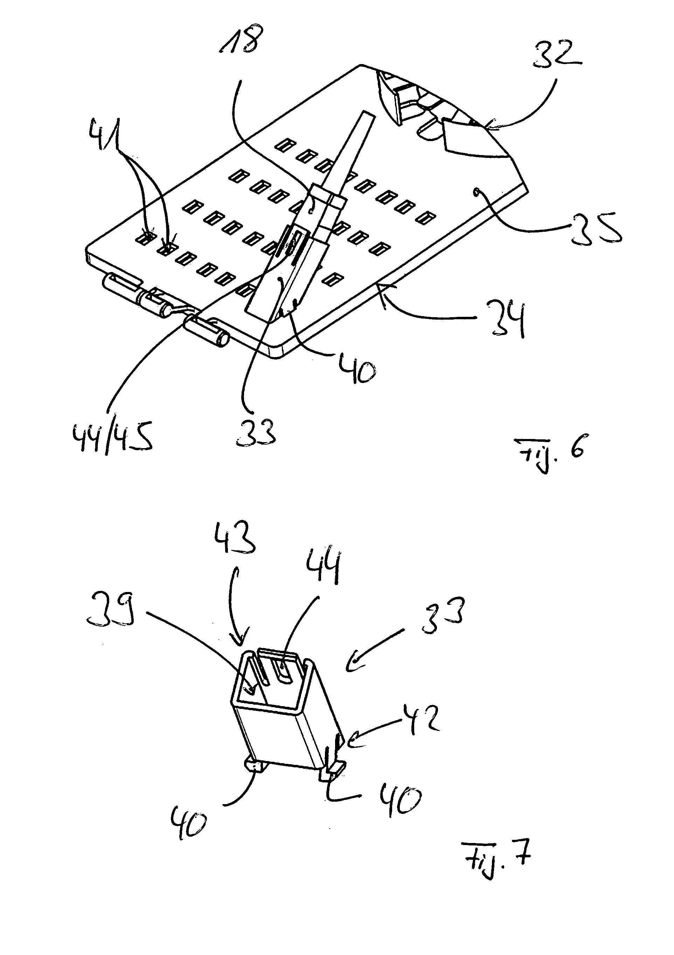

As shown in Figure 7, each adapter 33 has barb-like anchoring elements 40, via which the respective adapter 33 can be inserted into corresponding recesses 41 (see Figure 6) in the base body 35, in order to detachably connect the respective adapter 33 to the base body 35 of the second pigtail handling device 21 in the holding area 34.

The barb-like anchoring elements 40 are in this case associated with a lower section 42 of the adapter 33, with an opposite, upper section 43 thereof being associated with a recess 44, into which a corresponding barb-like anchoring element 45 of an optical waveguide plug 18 of a passive pigtail can be detachably latched.

List of reference symbols
- 10: Optical waveguide distribution device/wall box
- 11: Housing
- 12: Rear wall
- 13: Side wall
- 14: Internal area
- 15: Insertion area
- 16: Main optical waveguide cable
- 17: Optical waveguide socket
- 18: Optical waveguide plug
- 19: Splice cassette
- 20: First pigtail handling device
- 21: Second pigtail handling device
- 22: Segment
- 23: Excess-length storage area
- 24: Guide area
- 25: First guide channel
- 26: Second guide channel
- 27: Base body
- 28: Wall
- 29: Gap
- 30: Gap
- 31: Wall
- 32: Excess-length storage area
- 33: Adapter
- 34: Storage area
- 35: Base body
- 36: Attachment foot
- 37: Rotary joint
- 38: Section
- 39: Holding opening
- 40: Anchoring element
- 41: Recess
- 42: Section
- 43: Section
- 44: Recess
- 45: Anchoring element

## Claims

1. Pigtail handling device for pigtails which are installed in an optical waveguide distribution device and are prefabricated at one end with optical waveguide plugs, **characterized by** a plurality of identical segments (22), wherein each segment (22) on the one hand has an excess-length storage area (23) for storing excess lengths of active pigtails whose optical waveguide plugs are connected to optical waveguide sockets of a patch area of the optical waveguide distribution device, and on the other hand has a guide area (24), which comprises two guide channels (25, 26), specifically a first guide channel (25) for guiding active pigtails and a second guide channel (26) for guiding passive pigtails, whose optical waveguide plugs are not connected to optical waveguide sockets of the patch area.

2. Pigtail handling device according to Claim 1, **characterized in that** the segments (22) are positioned one above the other or alongside one another such that the first guide channels (25) of the segments and the second guide channels (26) of the segments are each aligned with one another and each complement one another.

3. Pigtail handling device according to Claim 1 or 2, **characterized in that** walls (28) of segments (22) which are arranged one above the other or alongside one another and bound the first guide channels (25) and the second guide channels (26) are aligned with one another and complement one another forming gaps (29, 30).

4. Pigtail handling device according to one of Claims 1 to 3, **characterized in that** in the area of each segment (22), the first guide channel (25) is positioned between the second guide channel (26) and the excess-length storage area (23).

5. Pigtail handling device for pigtails which are installed in an optical waveguide distribution device and are prefabricated at one end with optical waveguide plugs, **characterized by** an excess-length storage area (32) for storing excess lengths of passive pigtails, whose optical waveguide plugs are not connected to optical waveguide sockets of a patch area of the optical waveguide distribution device, and by a holding area (34) which has a plurality of adapters (33), wherein the passive pigtails can be coupled by their optical waveguide plugs to the adapters (33), the holding area (34) positioned at the side alongside the excess-length storage area (32), wherein both areas (32, 34) are formed on a common base body (35).

6. Pigtail handling device according to Claim 5, **characterized in that** the adapters (22) have barb-like anchoring elements (40) via which the adapters (22) engage in recesses (41) in the base body (35) and are detachably connected thereto, the adapters (33) positioned inclined with respect to the base body (35) in a state in which they are anchored on the base body (35), specifically such that holding openings (39) for adapters (33) for the optical waveguide plugs of passive pigtails face the excess-length storage area (32).

7. Pigtail handling device according to one of Claims 5 or 6, **characterized in that** the holding area (34) and the excess-length storage area (32) can together pivot jointly about a shaft (37).

8. Optical waveguide distribution device, in particular a wall box, having a housing, having an insertion area which is associated with the housing in order to introduce a main optical waveguide cable into an internal area which is defined by the housing, and in order to pass said cable out of the same, having a patch area, which is associated with the housing and has optical waveguide sockets, to which pigtails which run within the internal area and are prefabricated at one end with plugs can be coupled, having splice cassettes, in which splices between optical waveguides of the main optical waveguide cable and optical waveguides of the pigtails can be stored, and having an excess-length store for storing excess lengths of the pigtails, **characterized by**
a) a first pigtail handling device (20) according to one of Claims 1 to 4, and
b) a second pigtail handling device (21) according to one of Claims 5 to 7.

9. Optical waveguide distribution device according to Claim 8, **characterized in that** the second pigtail handling device (21) is positioned adjacent to the insertion area (15) between the insertion area (15) and the splice cassettes (19), such that the main optical waveguide cable can be passed through the splice cassettes (19), starting from the insertion area (15), under the holding area (34) and under the excess-length storage area (32) in the second pigtail handling device (21).

10. Optical waveguide distribution device according to Claim 8 or 9, **characterized in that** the first pigtail handling device (20) is positioned at the side alongside the second pigtail handling device (21) and the splice cassettes (19), specifically adjacent to the patch area which has the optical waveguide sockets (17).
